# FASCICULE DE BREVET EUROPEEN

(11) **EP 2 976 036 B1**
(45) Date de publication et mention de la délivrance du brevet: **11.11.2020**
(21) Numéro de dépôt: 14711518.2
(22) Date de dépôt: 20.03.2014
(51) Int. Cl.: A61C 8/00

(54) **ARMATURE RIGIDE SUSCEPTIBLE DE SUPPORTER UNE RESTAURATION DENTAIRE**
STARRER RAHMEN ZUM TRAGEN EINES ZAHNERSATZES
RIGID FRAMEWORK CAPABLE OF SUPPORTING A DENTAL RESTORATION

(30) Priorité: 22.03.2013 FR 1352556
(43) Date de publication de la demande: 27.01.2016
(73) Titulaire: Euroteknika, 74700 Sallanches (FR)
(72) Inventeur: ASSELBORN, François, F-74360 Abondance (FR); LANCIEUX, Cédric, F-74120 Megève (FR)
(74) Mandataire: Novaimo
(86) Numéro de dépôt international: PCT/EP2014/055659
(87) Numéro de publication internationale: WO 2014/147205

(56) Documents cités:
- WO-A1-2010/072458
- US-B1- 6 692 254

## Description

La présente invention concerne une armature rigide susceptible de supporter une restauration dentaire, notamment utilisée dans le cadre de la pose de prothèses dentaires.

La réalisation d'une prothèse dentaire définitive requiert généralement de nombreuses démarches de la part du patient, qui sont longues et coûteuses. Les opérations à réaliser ne permettent pas aux patients de rentrer chez eux le jour de l'opération avec leurs prothèses fixées de façon définitives.

WO 2010/072458 A1 divulgue une armature rigide pour supporter une restauration dentaire comprenant au moins un pilier et deux plaques perpendiculaires à l'axe longitudinal de ce ou ces pilier(s).

US 6 692 254 B1 divulgue une armature rigide pour supporter une restauration dentaire comprenant au moins un pilier et des plaques attachées à un tube enfilable sur le pilier de sorte que les plaques soient parallèles à l'axe longitudinal de ce ou ces pilier(s). Z

Le but de l'invention est donc de fournir une solution améliorée pour la préparation et la pose d'une prothèse dentaire, qui ne présente pas tout ou partie des inconvénients mentionnés ci-dessus.

La présente invention est définie par la revendication 1. Des modes de réalisation préférentiels sont divulgués dans les revendications dépendantes.

Selon des modes de réalisation particuliers :
- les deux plaques sont superposées sur tout ou partie de leur surface respective;
- les deux plaques sont juxtaposées au niveau de leurs bordures respectives et/ou en ce que leurs bordures respectives sont en vis-à-vis et séparées par un espace;
- les deux plaques sont fixées l'une à l'autre par un élément de liaison et/ou un matériau de fixation;
- l'élément de jonction forme une excroissance longitudinale au niveau de la paroi périphérique du corps du pilier;
- l'élément de liaison est un fil en fibre de verre;
- le matériau de fixation est une résine;
- la plaque comporte au moins une ouverture;
- le pilier et la plaque sont en matériau métallique, et/ou comprennent du titane et/ou un alliage de titane et/ou un alliage en chrome/cobalt ;
- le pilier est monté sur un pilier conique agencé sur un implant.

L'invention concerne également une prothèse comportant une telle armature.

Avantageusement, l'invention permet de réaliser une prothèse définitive en des temps très courts et à moindre coût.

Un autre avantage de l'invention, est de pouvoir offrir l'accès à la dentisterie implantaire à une grande majorité des personnes édentées ou partiellement édentées à un coût faible.

D'autres avantages et caractéristiques de l'invention apparaîtront mieux à la lecture de la description de deux modes de réalisation préférés qui vont suivre, en référence aux figures ci-dessous, réalisés à titre d'exemple indicatif et non limitatif :
- les figures 1A, 1B, 2A, 2B, 2C, 2D, 2E et 2F représentent une armature rigide susceptible de supporter une restauration dentaire, selon un exemple ne faisant pas partie de l'invention;
- la figure 3 représente une armature rigide susceptible de supporter une restauration dentaire selon un exemple ne faisant pas partie de l'invention;
- la figure 4 représente une variante de l'armature selon un exemple ne faisant pas partie de l'invention
- les figures 5A et 5C représentent un pilier de l'armature selon un mode de réalisation de l'invention comprenant deux plaques ;
- la figure 5B est une vue à plus grande échelle d'un corps du pilier représenté à la figure 5A ;
- les figures 6A et 6B représentent des vues de dessus du pilier de l'armature selon un mode de réalisation de l'invention ;
- la figure 7 est une vue de profil du pilier de l'armature selon ce mode de réalisation de l'invention comprenant deux plaques sensiblement de mêmes dimensions ;
- la figure 8 représente une plaque de l'armature ;
- la figure 9 est une vue de profil du pilier de l'armature selon un mode de réalisation de l'invention comprenant deux plaques de dimensions différentes ;
- la figure 10 est une vue de profil du pilier de la variante de l'armature selon un mode de réalisation de l'invention comprenant deux plaques sensiblement de mêmes dimensions ;
- les figures 11A et 11B représentent le pilier de l'armature selon un exemple ne faisant pas partie de l'invention, monté sur un implant ;
- la figure 12 est une vue éclatée du pilier illustré aux figures 11A et 11B ;
- les figures 13A et 14 représentent le pilier de l'armature selon un mode de réalisation monté sur un implant ;
- la figure 13B est une vue à plus grande échelle du pilier monté sur un implant représenté en figure 13A ;
- la figure 15 est une vue éclatée du pilier illustré aux figures 13A et 14 ;
- la figure 16 représente le pilier de la variante de l'armature selon un mode de réalisation monté sur un implant ;
- la figure 17 est une vue éclatée du pilier illustré à la figure 16 ;
- les figures 18, 20, 23 et 24 représentent une variante du pilier de l'armature selon un mode de réalisation de l'invention comprenant deux plaques ;
- la figure 19 est une vue de profil de la variante du pilier de l'armature illustrée aux figures 18, 20 et 21 qui est pourvue de deux plaques sensiblement de mêmes dimensions ;
- la figure 21 représente une vue de dessus de la variante du pilier de l'armature illustrée aux figures 18, 19, 20 :
- la figure 22 est une vue de profil de la variante du pilier de l'armature selon un mode de réalisation de l'invention comprenant deux plaques de dimensions différentes ;
- la figure 25 représente une vue de dessus de la variante du pilier de l'armature illustrée aux figures 23 et 24 ;
- les figures 26, 27 et 28 représentent la variante du pilier de l'armature selon un mode de réalisation montée sur un implant ;
- la figure 29 est une vue éclatée de la variante du pilier montée sur un implant illustrée aux figures 26, 27 et 28, et
- la figure 30 représente une armature rigide susceptible de supporter une restauration dentaire constituée de piliers montés sur des implants illustrés aux figures 26 à 29.

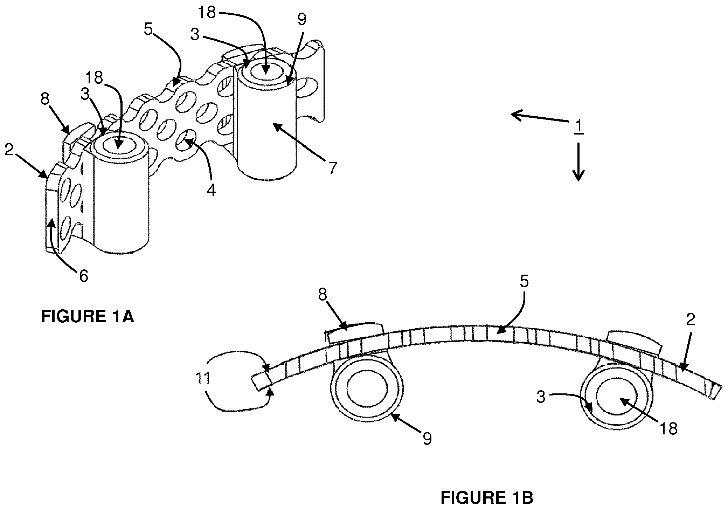

Sur les figures 1A, 1B, 2A, 2B, 2C, 2D, 2E, 2F, 3,4 et 30 sont représentés deux modes de réalisation d'une armature 1, 1' rigide susceptible de supporter une restauration dentaire. Cette armature 1, 1' est une armature prothétique pour la réalisation de prothèse définitive. Cette armature 1, 1' rigide comporte au moins deux piliers 9, 9' reliés entre eux par au moins une plaque 2, 2'.

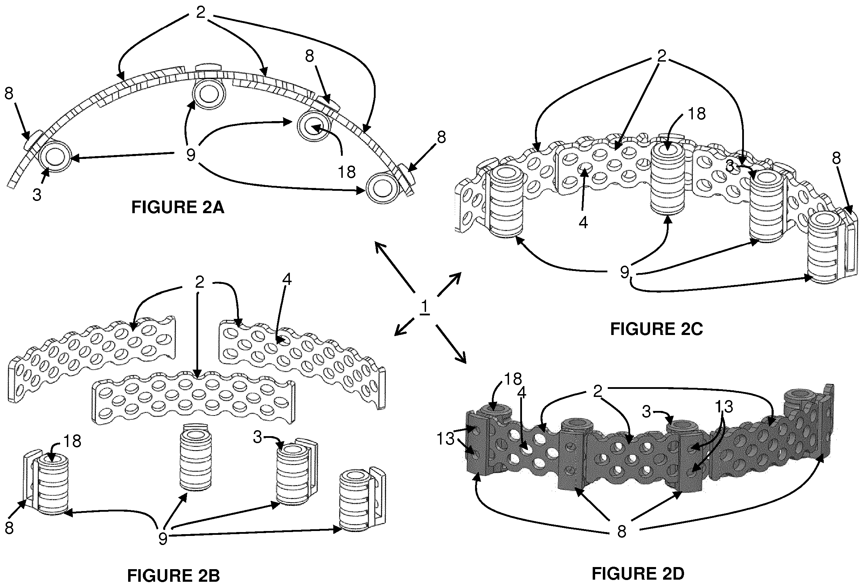

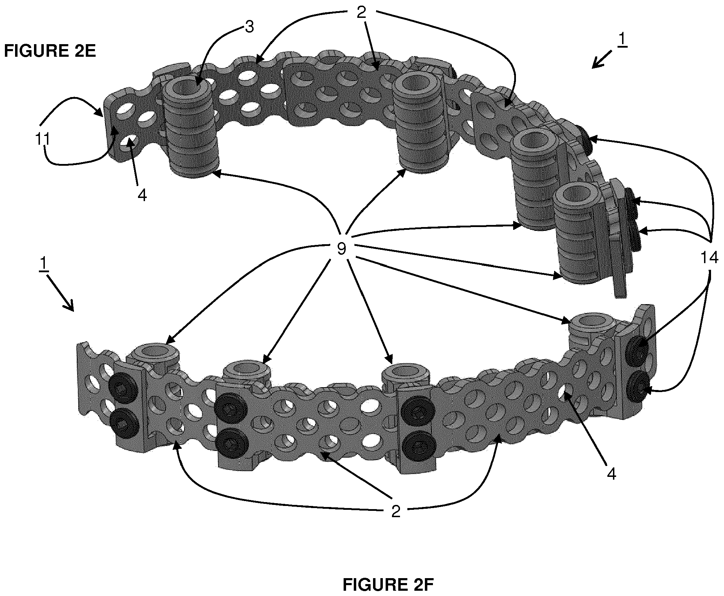

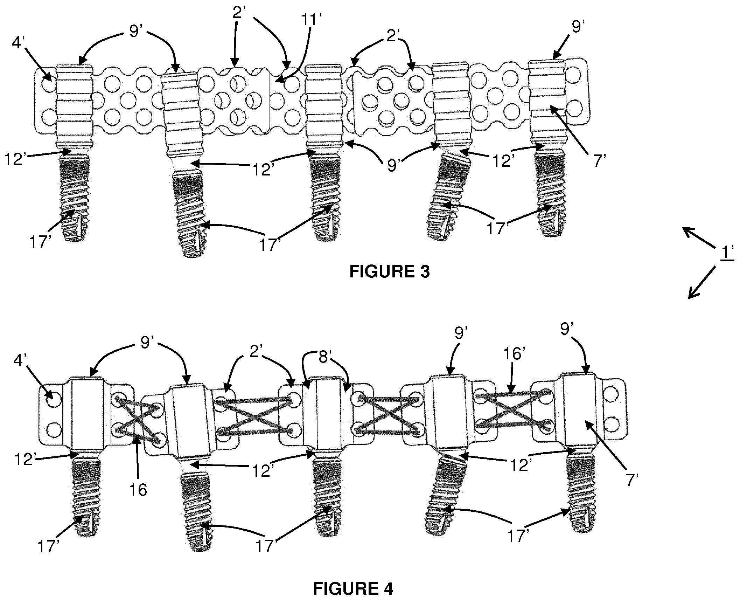

Une plaque 2, 2' est un élément de l'armature 1, 1' qui permet de relier des piliers 9, 9' entre eux et également de supporter des éléments prothétiques relatifs à une restauration dentaire.
Elle peut se présenter, avantageusement, sous la forme d'une quille ainsi qu'il est illustré par exemple aux figures 1A, 1B, 2A, 2B, 2C, 2D, 2E et 2F du premier mode de réalisation.
En référence, par exemple, aux figures 3, 4 et 30 relatives au deuxième mode de réalisation, elle peut également se présenter sous la forme d'une ailette.

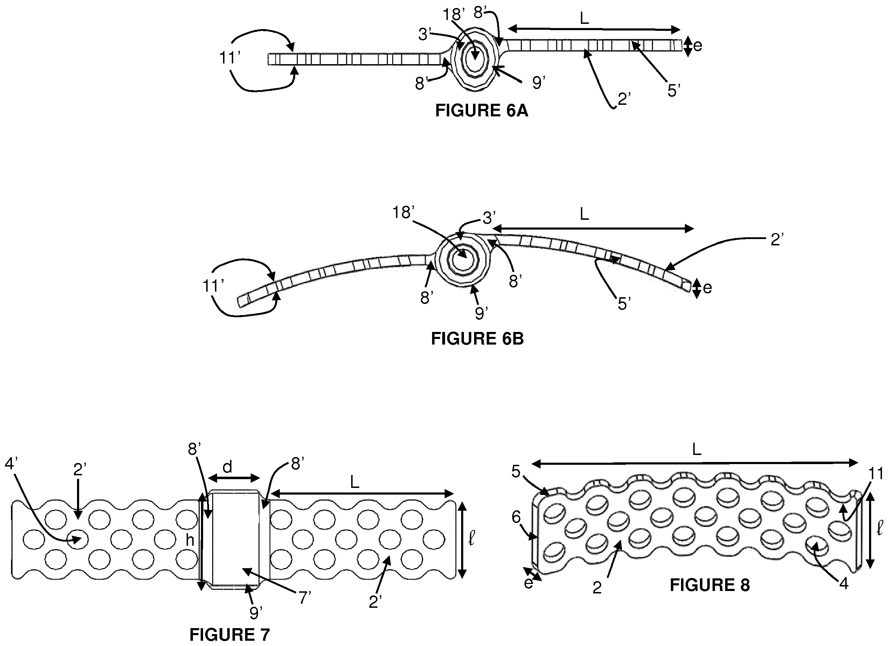

Sur les figures 6A, 6B, 7, 8, 18, 19, 20, 21, 23, 24 et 25 cette plaque 2, 2' présente une faible épaisseur e et une longueur L importante, sur une hauteur h proche de celle du pilier 9, 9'.

Cette plaque 2, 2' forme ainsi une surface 11, 11' qui peut être plane, par exemple à la figure 6A, ou courbée ainsi que l'illustre les figures 6B, 8, 21 et 25 de façon notamment à suivre la forme de la mâchoire d'un patient. On notera que la bordure 5, 5' supérieure et/ou inférieure peut ne pas être rectiligne. En effet, la plaque 5, 5' peut présenter des irrégularités notamment au niveau de ses bordures 5, 5' supérieure et inférieure agencées en périphérie de ladite plaque 2, 2'. Les bordures 5, 5' peuvent ainsi avoir une forme particulière de vagues, ou encore de créneaux. Cette forme particulière est par exemple visible sur les figures 1A, 5C, 18 ou encore 24.

La plaque 2, 2' a par exemple les dimensions suivantes :
- épaisseur e comprise entre 0,4 et 1 mm ;
- longueur L comprise entre 10 à 20 mm, et
- largeur I comprise entre 6 à 10 mm.

Cette plaque 2, 2' peut être perforée et comporter alors une ou plusieurs ouvertures 4, 4', par exemple des ouvertures circulaires comme illustré aux figures 7 et 8. Ces ouvertures 4, 4' circulaires présentent par exemple un diamètre compris entre 0,8 et 1,5 mm.

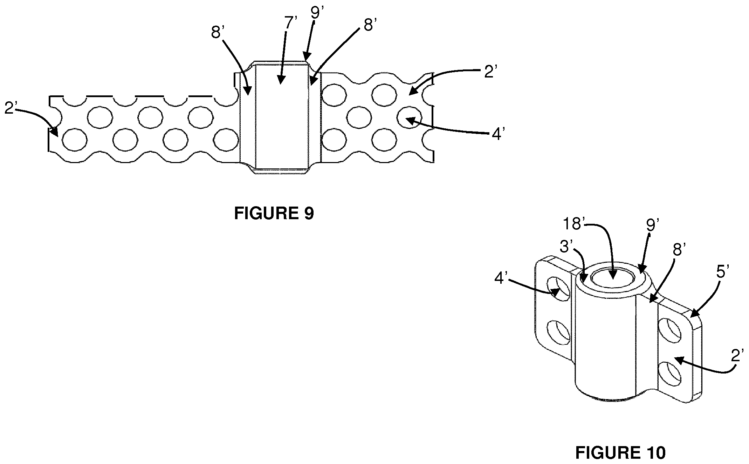

Dans la mesure où cette plaque 2, 2' comporte au moins plus de deux ouvertures 4, 4', ces dernières peuvent être réparties de manière ordonnées ou désordonnées avec des formes géométriques différentes ou similaires.
Lorsque ces ouvertures 4, 4' sont agencées de manière ordonnée, elles peuvent être alignées horizontalement, verticalement, en diagonale, de manière concentrique ou radiale ou encore selon une combinaison réalisée avec ces différents alignements.
Elles peuvent par exemple ne former qu'une seule rangée en colonne ou encore en ligne. Des exemples de certains de ces alignements sont représentés aux figures 9, 10 et 22.

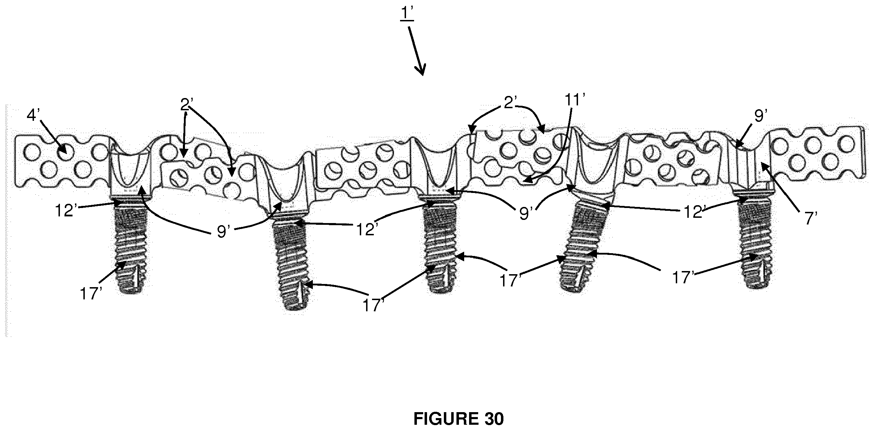

Ces ouvertures 4, 4' et/ou irrégularités permettent :
- à chaque plaque 2, 2' d'offrir une meilleur adhésion à un matériau de fixation tel qu'une résine, notamment utilisé pour assurer la liaison de plaques 2, 2' entre elles ;
- de retoucher plus facilement, par exemple par découpage, chaque plaque 2, 2' permettant d'adapter chaque pilier 9, 9' et par extension chaque armature 1, 1' à l'anatomie de la bouche d'un patient. Un exemple d'une armature 1' comportant des piliers 9' dont les plaques 2' ont été découpées/retouchées est visible sur la figure 30 ;
- d'obtenir des plaques 2, 2' qui sont souples et déformables afin d'épouser la forme de l'anatomie de la bouche c'est-à-dire ici celle de l'arcade dentaire.

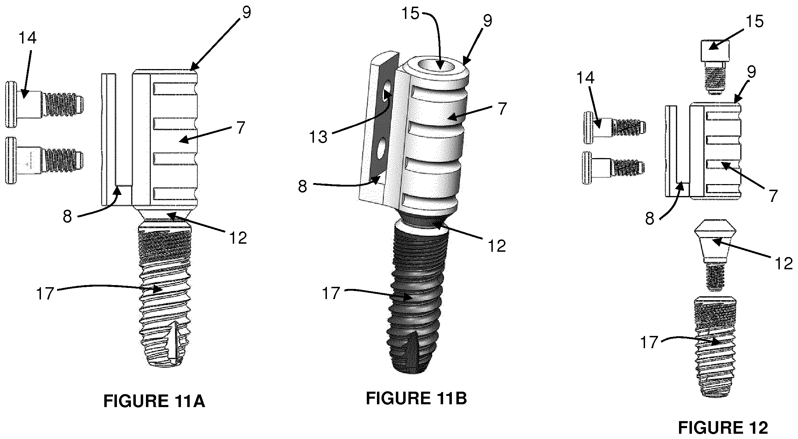

Les piliers 9, 9' utilisés dans les armatures 1, 1' du premier et deuxième mode de réalisation sont sensiblement différents, en référence par exemple aux figures 2B, 11A, 11B, 7, 5A à 5C, 18, 20 et 23. On notera en particulier que dans le deuxième mode de réalisation, le pilier 2' comprenant, notamment deux éléments de jonction 8' pourvus chacun d'une plaque 2', est un pilier monobloc présentant des propriétés de rigidité verticale importantes.

Alternativement, ce pilier 9' peut être réalisé à partir de l'assemblage de plusieurs pièces telles que le corps 3' du pilier et les plaques 2'. Dans ce cas, les éléments de jonction 8' présentent chacun une surface de liaison ayant des dimensions sensiblement similaires à la surface de liaison d'une plaque 2', susceptible d'être fixé au niveau de cet élément de jonction 8'. Cette fixation est réalisée de manière non limitative et non exhaustive par collage ou encore par soudure. Ces éléments de jonction 8' ont donc pour fonction de former une interface entre les plaques 2' en forme d'ailettes et le corps 3' du pilier 9'. Ils favorisent dans ce cas, la fixation de ces plaques 2'.

Les piliers 9, 9' de ces deux modes de réalisation comportent de manière non exhaustive et non limitative un corps 3, 3' comprenant au moins un élément de jonction 8, 8' pourvu d'une plaque 2, 2'. Le corps 3, 3' de ces piliers 9, 9' a une forme cylindrique de hauteur h d'environ 8 à 12 mm et de diamètre d de l'ordre 4 à 5 mm.

On notera qu'un pilier 9, 9', en particulier son corps 3, et une plaque 2, 2' sont par exemple en matériau métallique, et/ou comprennent du titane et/ou un alliage de titane et/ou un alliage en Cr/Co (chrome/cobalt). De plus, ce pilier 9, 9' est sablé afin d'améliorer les propriétés adhésives de ses surfaces, notamment à la résine.

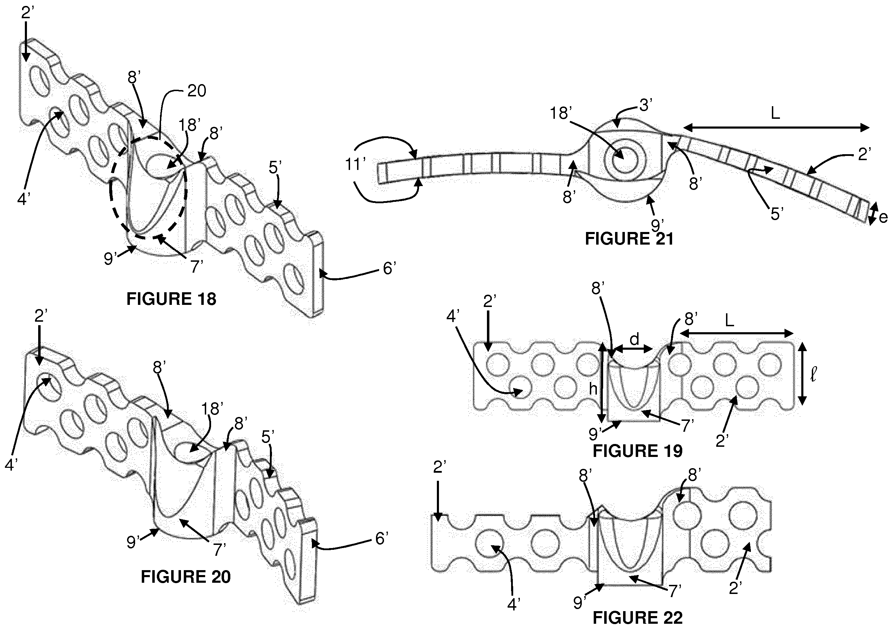

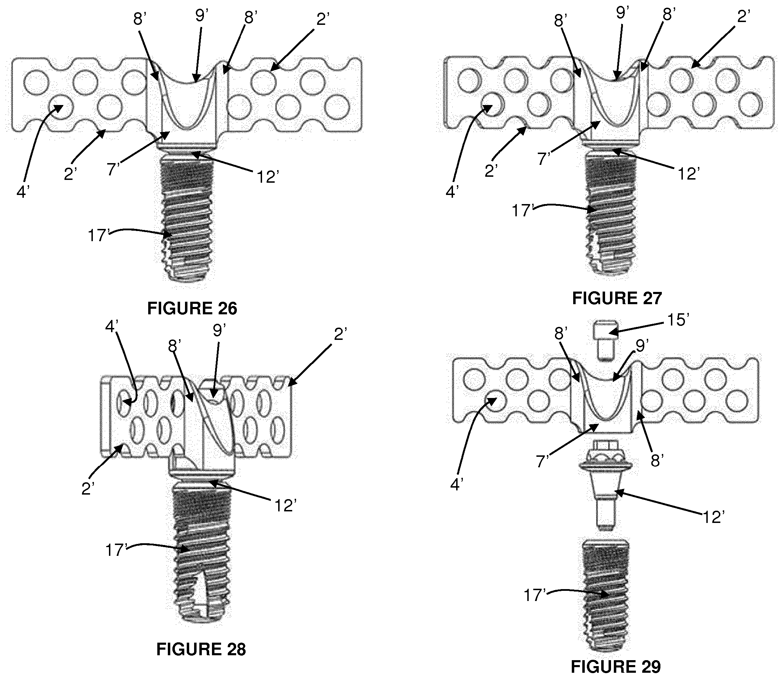

Le pilier 9, 9' présente également une largeur étroite définie pour son insertion optimale dans un couloir vestibulo-linguale des dents. On remarquera d'ailleurs dans une variante de ce pilier 9' du deuxième mode de réalisation visible sur les figures 18 à 30, qu'une partie supérieure 20 du corps 3' est biseautée (visible sur la figure 18) afin de réduire l'encombrement vestibulo-linguale.

Dans le premier mode de réalisation de cette armature 1, cette dernière peut comporter, ainsi que l'illustrent les figures 1A et 1B, deux piliers 9 qui peuvent être reliés entre eux par une plaque 2.
De manière alternative, cette armature 1 peut comporter par exemple quatre piliers 9 reliés entre eux par trois plaques 2, ainsi que l'illustrent les figures 2A, 2B, 2C, 2D, 2E et 2F, ou tout autre nombre de piliers.

Les piliers 9, de ce mode de réalisation de cette armature 1, comportent un corps 3 pourvu d'au moins un élément de jonction 8 auquel est liée au moins une plaque 2. Cet élément de jonction 8 est aménagé longitudinalement au niveau de la paroi périphérique 7 du corps 3 de chaque pilier 9, en particulier dans l'épaisseur du corps 3 de ce pilier 9. L'élément de jonction 8 forme alors un logement longitudinal au niveau de cette paroi périphérique 7.
Ce logement peut par exemple se présenter sous la forme d'une fente sensiblement étroite et longue. Un tel logement présente une forme qui est adaptée pour recevoir une ou deux plaques 2 qui sont susceptibles d'y être disposées.

Aux figures 1A et 1B, les piliers 9 de cette armature 1 comportent chacun une même plaque 2 agencée dans leur logement respectif formant l'élément de jonction 8.

Aux figures 2A, 2B, 2C, 2D, 2E et 2F, cette armature 1 comporte quatre piliers 9 comprenant chacun une ou deux plaques 2 au niveau de leur élément de jonction 8. En effet, du fait de la nature structurelle de l'élément de jonction 8, n'importe quelle partie de cette plaque 2, comprise entre ses deux extrémités, peut être agencée dans cet élément de jonction 8. Les plaques 2, de cette armature 1, sont sensiblement de mêmes dimensions.
Dans cette armature 1, l'agencement de chaque pilier 9 est réalisé en fonction de la position des autres piliers 9 mais également en fonction du positionnement des plaques 2 dans les éléments de jonction 8 de ces piliers 9. Cet agencement particulier vise à superposer les plaques 2 sur tout ou partie de leur surface 11 respective de sorte à obtenir une armature 1 qui peut avoir la forme de la mâchoire d'un individu auquel la prothèse, comprenant cette armature 1, est destinée. On notera que ces plaques 2 sont suffisamment souples et longues pour pouvoir être glissées dans chaque élément de jonction 8 des piliers 9.

Ces plaques 2 superposées sont alors fixées les unes aux autres par un élément de liaison et/ou un matériau de fixation
L'élément de liaison correspond par exemple à au moins une vis ou encore à un fil en fibre de verre qui est apte à coopérer avec les ouvertures 4 des plaques 2 superposées afin de les relier et donc de créer un lien mécanique solide entre les piliers 9. Dans le cas où l'élément de liaison correspond à au moins une vis, l'ouverture 4, de chacune des plaques 2 superposées, comporte une paroi périphérique filetée apte à coopérer avec ladite vis.

Un matériau de fixation, tel qu'une résine, peut être utilisé pour réaliser la fixation de ces plaques 2 entre elles notamment lorsqu'elles sont superposées. En variante, un tel matériau peut être utilisé en complément d'un des éléments de liaison précédemment cité pour renforcer la fixation de ces plaques 2 entre elles et donc assurer un lien mécanique solide entre les piliers 9 de cette armature 1.

Dans ce mode de réalisation, la partie de la plaque 2 positionnée dans l'élément de jonction 8 de chaque pilier 9 est fixée à chacun de ces derniers, par un élément de liaison et/ou un matériau de fixation.
Cette élément de liaison peut correspondre à un trou 13 aménagé dans l'élément de jonction 8 dont la paroi périphérique filetée est apte à coopérer avec au moins une vis 14 pour lier cette plaque 2 audit élément de jonction 8.
Alternativement, un fil en fibre de verre peut être utilisé à la place de la vis 14 pour coopérer avec le trou et au moins une ouverture 4 de la plaque 2 afin de la lier à l'élément de jonction 8.
Un matériau de fixation peut être utilisé pour lier cette plaque 2 à l'élément de jonction 8 et donc au pilier 9, soit de manière alternative à un élément de fixation ou soit de manière complémentaire à un tel élément.

Dans le deuxième mode de réalisation illustré notamment sur les figures 3 4 et 30, cette armature 1' comporte au moins deux piliers 9' reliés entre eux à partir de deux plaques 2'.

Les piliers 9' de cette armature comprennent deux éléments de jonction 8' pourvus chacun d'une plaque 2', ainsi que l'illustrent par exemple les figures 3, 4, 5A, 5B, 5C, 18, 19, 20, 21, 22, 23, 24 et 30.

Ces éléments de jonction 8' sont réalisés au niveau de la surface externe du corps 3' du pilier 9'. Ils correspondent à des excroissances aménagées longitudinalement au niveau de la paroi périphérique 7' du corps 3' du pilier 9', sur tout ou partie de cette paroi 7'.
Ces éléments de jonction 8' sont positionnés de manière décalée l'un par rapport à l'autre, c'est-à-dire non diamétralement opposés. Ce décalage correspond environ à l'épaisseur d'une plaque 2'.

Un tel agencement de ces éléments de jonction 8' permet notamment d'induire un décalage des plaques 2' de sorte à permettre une disposition optimale des piliers 9' quand ceux-ci doivent former l'armature 1' pour la pose d'une prothèse dentaire. Autrement dit grâce à cet agencement, une première plaque 2' est alors située dans l'axe du pilier 9' et une deuxième plaque 2' est déportée de l'épaisseur de la plaque 2' afin d'obtenir une bonne imbrication des plaques entre-elles lorsque les piliers 9' sont montés dans une armature 1'. Des piliers 9' avec un tel agencement sont par exemple visibles sur les figures 6A, 6B et 21.

On notera de plus que ce décalage des éléments de jonction 8' pour chaque pilier 9', permet une superposition optimale de leurs plaques 2', contribuant ainsi à renforcer la cohésion et la rigidité de l'armature 1' formée notamment par les piliers 9' et les plaques 2'.

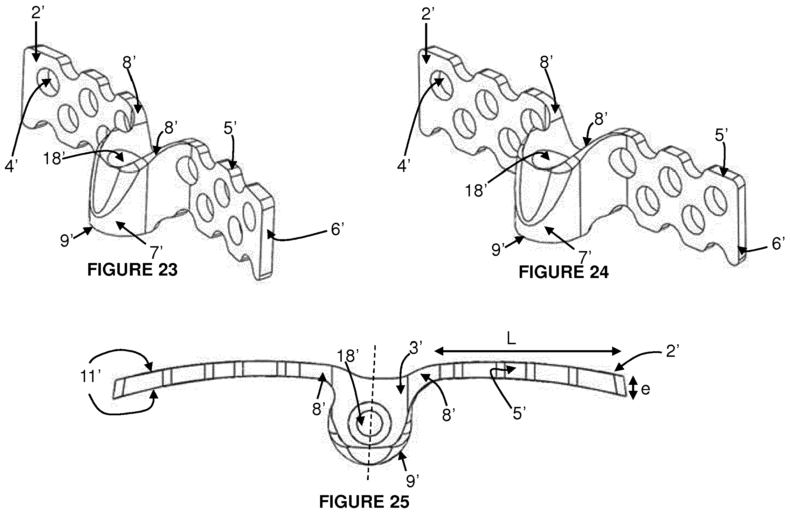

Dans une variante illustrée sur les figures 23, 24 et 25, les éléments de jonctions 8' ne sont pas décalés et sont alors positionnées de manière symétrique à un plan médian 19 (visible sur la figure 25) du corps 3' du pilier 9'. Un tel agencement de ces éléments de jonction 8' permet notamment d'assurer que les plaques 2' dont sont pourvus ces éléments de jonctions 8', aient tout ou partie de leurs surfaces respectives qui soient comprises sensiblement dans un même plan. De plus ces éléments de jonction 8' permettent également d'induire un décalage des plaques 2' de sorte à permettre une disposition optimale des piliers 9' quand ceux-ci doivent former l'armature 1' pour la pose d'une prothèse dentaire. Ces éléments de jonction 8' permettent aussi pour chaque pilier 9' une superposition optimale de leurs plaques 2', contribuant ainsi à renforcer la cohésion et la rigidité de l'armature 1' formée notamment par les piliers 9' avec leurs plaques 2'.

Le pilier 9' du deuxième mode de réalisation permet en fonction de l'agencement des éléments de jonction 8' d'avoir des plaques 2' situées dans l'axe du pilier 9' ou déportées en fonction de la position de l'axe d'un implant 17, 17' par rapport aux dents. Un tel implant 17, 17' sur lequel le pilier 9' est monté est décrit par la suite.

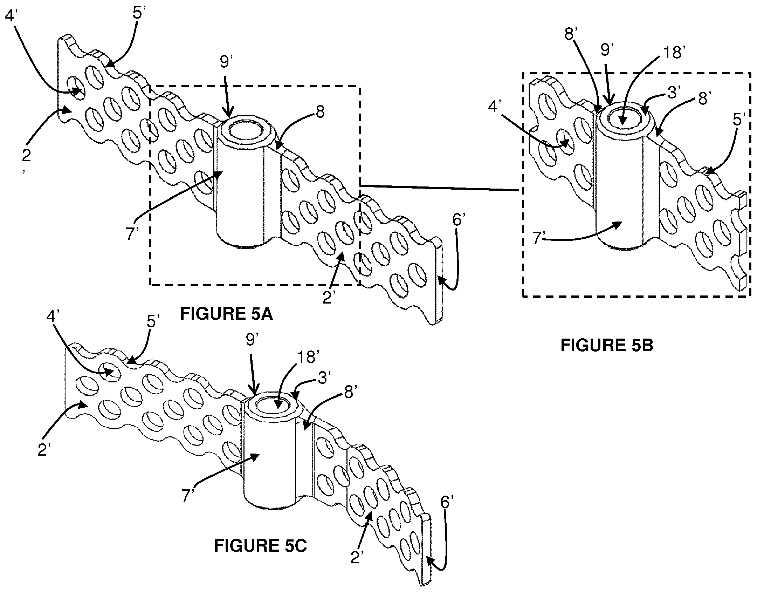

Sur les figures 3 et 30, les piliers 9' de l'armature 1' comportent chacun deux plaques 2'. Ces deux plaques 2' peuvent être de mêmes dimensions ainsi que l'illustrent par exemple les figures 5A à 5C, 7, 18, 19, 20, 23 et 24. Elles peuvent à l'inverse être de dimensions différentes comme l'illustre la figure 9 en comportant sur une plaque 2' des ouvertures 4' alignées horizontalement sur deux lignes et sur l'autre plaque 2' des ouvertures 4' alignées en diagonale. De même sur la figure 22 en comportant sur une plaque 2' des ouvertures 4' alignées horizontalement sur une ligne et sur l'autre plaque 2' des ouvertures 4' alignées en diagonale.

Sur les figures 9 et 22, le pilier 9' est découpé/retouché pour adapter la forme des plaques 2' à l'anatomie de la bouche d'un patient.

Ces piliers 9' sont agencés de façon à ce que leurs plaques 2' se superposent sur tout ou partie de leur surface 11' respective. Les surfaces 11' superposées sont alors fixées les unes aux autres par un élément de liaison et/ou un matériau de fixation.

A la figure 4, dans une variante de ce deuxième mode de réalisation de l'armature les piliers 9' comportent chacun deux plaques 2'. Ces deux plaques sont sensiblement de mêmes dimensions et comprennent chacune deux ouvertures 4' alignées verticalement.

Ces piliers 9' sont agencés de façon à ce que leurs plaques 2' soient juxtaposées ou en vis-à-vis au niveau de leur bordure 6' latérale respective. Ces plaques 2', non superposées dans cette variante de réalisation dans laquelle leurs bordures 6, 6' respectives sont en vis-à-vis et séparées par un espace, sont alors fixées les unes aux autres par un élément de liaison et/ou un matériau de fixation.

Cet élément de liaison peut correspondre par exemple à un fil en fibre de verre 16' qui est alors passé dans les ouvertures 4' des plaques 2' superposées afin de les relier et donc de réaliser un lien mécanique solide entre les piliers 9' de cette armature 1'.

Alternativement, cet élément de liaison peut également correspondre à au moins une vis susceptible de coopérer avec au moins une ouverture 4' de chacune des plaques 2' superposées. Ces ouvertures 4' peuvent donc comporter à cet effet une paroi périphérique filetée apte à coopérer avec ladite vis.

Un matériau de fixation tel qu'une résine peut être utilisé pour réaliser la fixation de ces plaques 2' entre elles, notamment lorsqu'elles sont superposées, mais il peut également être utilisé en complément d'un des éléments de liaison précédemment cité pour renforcer la fixation de ces plaques 2' entre elles et donc assurer un lien mécanique solide entre les piliers 9' de cette armature 1'.

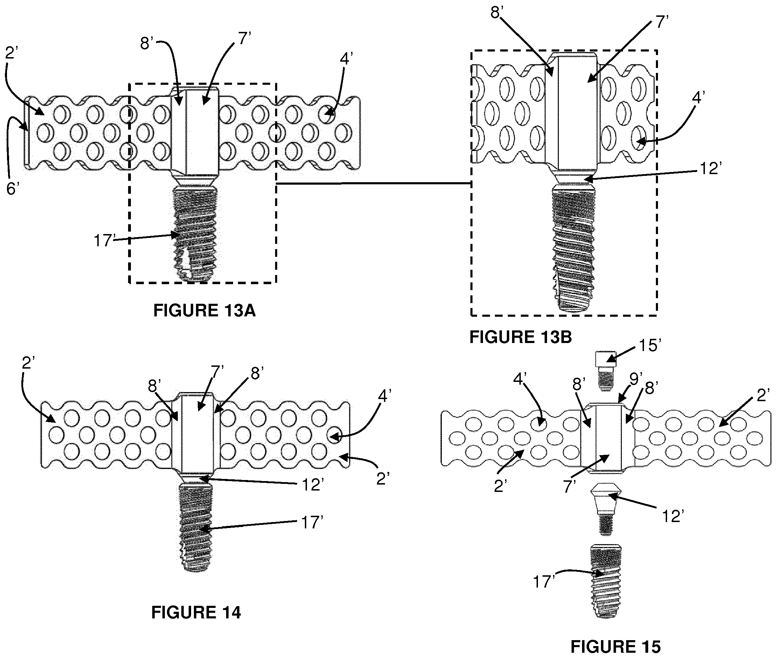

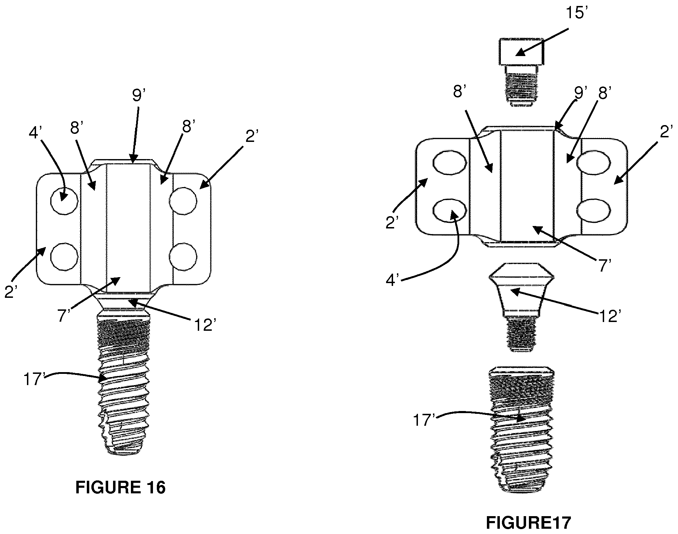

Dans ces deux modes de réalisation, une telle fixation de ces plaques 2, 2' entre elles et également au niveau de chaque pilier 9, 9' permet de renforcer la rigidité ainsi que la résistance mécanique de l'armature 1, 1'. Chaque pilier 9, 9', des armatures 1, 1' relatives à chacun des deux modes de réalisation, peut être monté sur l'implant 17, 17', ainsi que l'illustrent par exemple les figures 3, 4, 11A, 11B, 12, 13A, 13B, 14, 15, 16, 17, 26, 27, 28, 29 et 30.

Cet implant 17, 17', qui est de forme générale cylindrique, a une paroi périphérique filetée. Il est généralement en titane, éventuellement recouvert d'hydroxyapatite, matériau qui se laisse facilement coloniser par les cellules du tissu osseux. Un trou borgne est alésé dans le corps de cet implant. Ce trou borgne présente une paroi périphérique filetée sur laquelle est agencé un pilier conique 12, 12'.

Ce pilier conique 12, 12' comporte également un trou borgne qui présente une paroi périphérique filetée et sur lequel est positionné le pilier 9, 9'. Ce pilier 9, 9' est par la suite maintenu fixé à ce pilier conique 12, 12' à partir d'une vis 15, 15' qui est susceptible de coopérer avec la paroi périphérique filetée de ce pilier conique 12, 12', en passant par un trou 18, 18' alésé dans le corps 3, 3' du pilier 9, 9'. Plus précisément, chaque pilier 9, 9' est monté de façon fixe par vissage sur le pilier conique 12, 12' qui peut être droit et/ou angulé et de différentes hauteurs. On notera que l'angulation des implants 17, 17' est gérée par ces piliers coniques 12, 12' ainsi que la hauteur de gencive.

Ainsi, une telle armature 1, 1' permet alors de réaliser des prothèses dentaires comprenant des piliers 9, 9' et des plaques 2, 2' susceptibles d'améliorer leur rigidité et leur durabilité. Cette armature 1, 1' permet également de réaliser rapidement une prothèse définitive sur des implants 17, 17', sans passer par une phase de prothèse provisoire comme c'est le cas dans l'état de la technique. La prothèse est finalement agencée autour de cette armature qui est discrète, peu encombrante, tout en étant suffisamment rigide pour supporter les efforts importants de manière durable. En remarque, l'agencement de la prothèse autour de l'armature participe aussi à la liaison des différents éléments de cette armature, notamment la ou les plaques 2, 2'.

## Revendications

1. Armature (1') rigide susceptible de supporter une restauration dentaire comportant au moins deux piliers (9'), chaque pilier (9') étant monobloc et comportant un corps (3') comprenant deux éléments de jonction (8') pourvus chacun d'une plaque (2'), lesdits au moins deux piliers (9') étant reliés entre eux par leur deux plaques (2'),
**caractérisé en ce que** l'élément de jonction (8') est aménagé longitudinalement au niveau de la paroi périphérique (7') du corps (3') de chaque pilier (9').

2. Armature (1') selon la revendication précédente, **caractérisée en ce que** les deux plaques (2') sont aptes à être superposées sur tout ou partie de leur surface (11') respective.

3. Armature (1') selon la revendication 1, **caractérisée en ce que** les deux plaques (2') sont aptes à êtres juxtaposées au niveau de leurs bordures (6') respectives et/ou **en ce que** leurs bordures (6') respectives sont aptes à venir en vis-à-vis et séparées par un espace.

4. Armature (1') selon l'une quelconque des revendications précédentes, **caractérisée en ce que** les deux plaques (2') sont aptes à être fixées l'une à l'autre par un élément de liaison et/ou un matériau de fixation.

5. Armature (1') selon l'une quelconque des revendications précédentes, **caractérisée en ce que** l'élément de jonction (8') forme une excroissance longitudinale au niveau de la paroi périphérique (7') du corps (3') du pilier (9').

6. Armature (1') selon l'une quelconque des revendications précédentes, **caractérisée en ce qu'**un élément de liaison est un fil en fibre de verre (16).

7. Armature (1') selon l'une quelconque des revendications précédentes, **caractérisée en ce qu'**un matériau de fixation est une résine.

8. Armature (1') selon l'une quelconque des revendications précédentes, **caractérisée en ce que** la plaque (2') comporte au moins une ouverture (4').

9. Armature (1') selon l'une quelconque des revendications précédentes, **caractérisée en ce que** le pilier (9') et la plaque (2') sont en matériau métallique, et/ou comprennent du titane et/ou un alliage de titane et/ou un alliage en chrome/cobalt.

10. Armature (1') selon l'une quelconque des revendications précédentes, **caractérisée en ce que** le pilier (9') est monté sur un pilier conique (12') agencé sur un implant (17').

11. Armature (1') selon l'une quelconque des revendications précédentes, **caractérisée en ce que** le corps du pilier (9') comporte une partie supérieure (20) qui est biseautée.

12. Prothèse comportant une armature (1') selon l'une quelconque des revendications 1 à 11.

## Patentansprüche

1. Starrer Rahmen (1'), welcher dafür eingerichtet ist, einen Zahnersatz zu tragen, und wenigstens zwei Säulen (9') aufweist, wobei jede Säule (9') einstückig ist und einen Körper (3') aufweist, der zwei Anschlusselemente (8') umfasst, die jeweils mit einer Platte (2') versehen sind, wobei die wenigstens zwei Säulen (9') durch ihre zwei Platten (2') miteinander verbunden sind,
**dadurch gekennzeichnet, dass** das Anschlusselement (8') längs an der Umfangswand (7') des Körpers (3') der jeweiligen Säule (9') angeordnet ist.

2. Rahmen (1') nach dem vorhergehenden Anspruch, **dadurch gekennzeichnet, dass** die zwei Platten (2') geeignet sind, auf ihrer gesamten jeweiligen Fläche (11') oder einem Teil davon übereinandergelegt zu werden.

3. Rahmen (1') nach Anspruch 1, **dadurch gekennzeichnet, dass** die zwei Platten (2') geeignet sind, an ihren jeweiligen Rändern (6') aneinandergelegt zu werden, und/oder dadurch, dass ihre jeweiligen Ränder (6') geeignet sind, in einander gegenüberliegende und durch einen Zwischenraum getrennte Positionen zu gelangen.

4. Rahmen (1') nach einem der vorhergehenden Ansprüche, **dadurch gekennzeichnet, dass** die zwei Platten (2') geeignet sind, durch ein Verbindungselement und/oder ein Befestigungsmaterial aneinander befestigt zu werden.

5. Rahmen (1') nach einem der vorhergehenden Ansprüche, **dadurch gekennzeichnet, dass** das Anschlusselement (8') einen Längsvorsprung an der Umfangswand (7') des Körpers (3') der Säule (9') bildet.

6. Rahmen (1') nach einem der vorhergehenden Ansprüche, **dadurch gekennzeichnet, dass** ein Verbindungselement ein Glasfaserdraht (16) ist.

7. Rahmen (1') nach einem der vorhergehenden Ansprüche, **dadurch gekennzeichnet, dass** ein Befestigungsmaterial ein Harz ist.

8. Rahmen (1') nach einem der vorhergehenden Ansprüche, **dadurch gekennzeichnet, dass** die Platte (2') wenigstens eine Öffnung (4') aufweist.

9. Rahmen (1') nach einem der vorhergehenden Ansprüche, **dadurch gekennzeichnet, dass** die Säule (9') und die Platte (2') aus metallischem Material hergestellt sind und/oder Titan und/oder eine Titanlegierung und/oder eine Chrom-Cobalt-Legierung umfassen.

10. Rahmen (1') nach einem der vorhergehenden Ansprüche, **dadurch gekennzeichnet, dass** die Säule (9') auf einer konischen Säule (12') angebracht ist, die auf einem Implantat (17') angeordnet ist.

11. Rahmen (1') nach einem der vorhergehenden Ansprüche, **dadurch gekennzeichnet, dass** der Körper der Säule (9') einen oberen Teil (20) aufweist, welcher abgeschrägt ist.

12. Prothese, welche einen Rahmen (1') nach einem der Ansprüche 1 bis 11 aufweist.

## Claims

1. Rigid framework (1') capable of supporting a dental restoration comprising at least two posts (9'), each post (9') being of one piece and comprising a body (3') comprising two joining elements (8') each one provided with a plate (2'), the said at least two posts (9') being joined together by their two plates (2'), **characterized in that** the joining element (8') is arranged longitudinally at the level of the peripheral wall (7') of the body (3') of each post (9').

2. Framework (1') according to the preceding claim, **characterized in that** the two plates (2') are able to be superposed over all or part of their respective surface (11').

3. Framework (1') according to Claim 1, **characterized in that** the two plates (2') are able to be juxtaposed at the level of their respective edges (6') and/or in that their respective edges (6') are able to face one another separated by a space.

4. Framework (1') according to any one of the preceding claims, **characterized in that** the two plates (2') are able to be fixed to one another by a connecting element and/or a fixing material.

5. Framework (1') according to any one of the preceding claims, **characterized in that** the joining element (8') forms a longitudinal protrusion at the level of the peripheral wall (7') of the body (3') of the post (9').

6. Framework (1') according to any of the preceding claims, **characterized in that** a connecting element is a fibreglass filament (16).

7. Framework (1') according to any one of the preceding claims, **characterized in that** a fixing material is a resin.

8. Framework (1') according to any one of the preceding claims, **characterized in that** the plate (2') comprises at least one opening (4').

9. Framework (1') according to any one of the preceding claims, **characterized in that** the post (9') and the plate (2') are made of a metallic material, and/or contains titanium and/or a titanium alloy and/or a chrome/cobalt alloy.

10. Framework (1') according to any one of the preceding claims, **characterized in that** the post (9') is mounted on the conical post (12') arranged on an implant (17').

11. Framework (1') according to any one of the preceding claims, **characterized in that** the body of the post (9') comprises an upper part (20) which is chamfered.

12. Prosthesis comprising a framework (1') according to any one of Claims 1 to 11.
